# EUROPÄISCHE PATENTANMELDUNG

(11) **EP 3 831 510 A1**
(43) Veröffentlichungstag der Anmeldung: **09.06.2021**
(21) Anmeldenummer: 19213272.8
(22) Anmeldetag: 03.12.2019
(51) Int. Cl.: B22D 11/00, G01S 13/74, G06K 19/00, C21C 5/46, C21C 5/52

(54) **TRANSPONDERANORDNUNG BEI ELEMENT EINER METALLURGISCHEN ANLAGE**

(71) Anmelder: Primetals Technologies Austria GmbH, 4031 Linz (AT)
(72) Erfinder: Hartl, Franz, 4720 Kallham (AT); Rohrhofer, Andreas, 4070 Eferding (AT); Mayrhofer, Anna, 4722 Peuerbach (AT); Voglmayr, Bernhard, 4060 Leonding (AT)
(74) Vertreter: Metals@Linz

(57) **Zusammenfassung**

Ein Element einer metallurgischen Anlage - beispielsweise ein Lanzenkopf (4) einer Sauerstofflanze (2) eines Konverters (1) oder eine Kokillenwand (15) einer Stranggießkokille - weist eine Ausnehmung (5) auf, in der eine Hülse (6) kraftschlüssig gehalten ist. In der Hülse (6) ist ein RFID-Transponder (10) mittels eines Klebstoffs eingeklebt oder mittels einer Vergussmasse vergossen.

## Beschreibung

### Gebiet der Technik

Die vorliegende Erfindung geht aus von einem Element einer metallurgischen Anlage.

### Stand der Technik

Metallurgische Anlagen und die zugehörigen Elemente sind allgemein bekannt. Rein beispielhaft werden hiermit als metallurgische Anlagen eine Stranggießanlage und ein Konverter (im englischen als BOF = blast oxygen fuenace bezeichnet) genannt. Die zugehörigen Elemente umfassen beispielsweise die Seitenwände einer Stranggießkokille, das Konvertergefäß, eine Sauerstofflanze, deren Lanzenkopf und andere mehr.

### Zusammenfassung der Erfindung

Es besteht ein Interesse daran, individuell zu verfolgen, wann welches Element einer metallurgischen Anlage in Verbindung mit welcher Charge an flüssigem Metall verwendet wird. Beispielsweise können aufgrund von Langzeitauswertungen Optimierungen vorgenommen werden. Auch kann für ein einzelnes Element in automatisierter Form eine Ermittlung des aufgrund der Verwendung aufgelaufenen Verschleißes erfolgen.

Die Aufgabe der vorliegenden Erfindung besteht darin, ein Element einer metallurgischen Anlage derart auszugestalten, dass eine derartige Verwendungsverfolgung auf einfache Weise implementiert werden kann.

Die Aufgabe wird durch ein Element einer metallurgischen Anlage mit den Merkmalen des Anspruchs 1 gelöst. Vorteilhafte Ausgestaltungen des Elements der metallurgischen Anlage sind Gegenstand der abhängigen Ansprüche 2 bis 16.

Erfindungsgemäß weist das Element der metallurgischen Anlage eine Ausnehmung auf, in der eine Hülse kraftschlüssig gehalten ist. In der Hülse ist ein RFID-Transponder mittels eines Klebstoffs eingeklebt oder mittels einer Vergussmasse vergossen.

RFID-Transponder als solche sind allgemein bekannt. Sie werden im Stand der Technik jedoch in der Regel auf das Element, das identifiziert werden soll, aufgeschraubt. Eine derartige Aufschraubung ist bei Elementen von metallurgischen Anlagen in der Regel nicht möglich oder mit nennenswerten Nachteilen verbunden. Durch die erfindungsgemäße Anordnung des RFID-Transponders in einer Hülse nebst dem kraftschlüssigen Halten in der Ausnehmung des Elements ist jedoch ein Aufschrauben nicht erforderlich. Vielmehr kann die Hülse mit geringem Installationsaufwand und unter Inanspruchnahme eines minimalen Bauraums in das Element der metallurgischen Anlage integriert werden.

Zur Realisierung der kraftschlüssigen Verbindung der Hülse mit dem Element der metallurgischen Anlage ist es möglich, dass die Hülse in das Element eingepresst ist. Beispielsweise kann die Hülse - zumindest in manchen Fällen - schlichtweg mittels eines Hammers in das Element eingeschlagen werden. Bereits diese Vorgehensweise sorgt dafür, dass die Hülse in dem Element zuverlässig gehalten wird. Noch besser ist es, wenn die Hülse in das Element eingeschrumpft ist.

Die Hülse kann eine durchgehende Bohrung aufweisen. In diesem Fall ist RFID-Transponder in der durchgehenden Bohrung angeordnet. Noch besser ist es, wenn die Hülse anstelle der durchgehenden Bohrung eine Sackbohrung aufweist. In diesem Fall ist der RFID-Transponder in der Sackbohrung angeordnet. Der Vorteil der Sackbohrung besteht darin, dass sich auf einfache Weise eine zuverlässige Positionierung des RFID-Transponders ergibt, wobei diese Positionierung durch das Einkleben bzw. Vergießen fixiert wird.

Vorzugsweise besteht die Hülse aus einem Material mit einer hohen Wärmeleitfähigkeit. Beispiele derartiger Materialien sind Aluminium und insbesondere Kupfer. Durch ein Material mit hoher Wärmeleitfähigkeit wird in der Hülse anfallende Wärme schnell an die Umgebung abgegeben.

Vorzugsweise besteht die Hülse aus einem Material, das in etwa den gleichen Temperaturausdehnungskoeffizienten aufweist wie das Element der metallurgischen Anlage in der Umgebung der Hülse. Abweichungen von etwa 10 % sind jedoch zulässig. Aufgrund des in etwa gleichen Temperaturausdehnungskoeffizienten bleibt der Kraftschluss im wesentlichen unabhängig von der Betriebstemperatur des Elements der metallurgischen Anlage.

Besonders bevorzugt besteht die Hülse aus demselben Material wie das Element der metallurgischen Anlage in der Umgebung der Hülse. Dadurch ist der Kraftschluss völlig unabhängig von der Betriebstemperatur des Elements der metallurgischen Anlage.

In einer bevorzugten Ausgestaltung weist die Hülse einen rohrartigen Abschnitt auf, der an einem seiner Enden mit einem Ringflansch abgeschlossen ist. In diesem Fall ist die Hülse derart in der Ausnehmung angeordnet, dass der rohrartige Abschnitt in der Ausnehmung angeordnet ist und der Ringflansch höhengleich mit dem Element in der Umgebung der Hülse verläuft. Es ergeben sich somit durch die Hülse keine zusätzlichen Kanten oder erhabenen Stellen. Dies kann von Vorteil sein, wenn die Ausnehmung sich im Bereich einer Gas- oder Flüssigkeitsströmung befindet. Auch kann die Hülse im Bereich des Ringflansches vollständig plan ausgeführt sein. Im Falle einer Sackbohrung kann die Sackbohrung nach Bedarf an der dem Ringflansch zugewandten Seite oder an der von dem Ringflansch abgewandten Seite offen sein.

Es ist möglich, dass in der Hülse nur ein einzelner RFID-Transponder angeordnet ist, also der bereits erwähnte RFID-Transponder. Alternativ ist es möglich, dass in der Hülse mindestens ein weiterer RFID-Transponder eingeklebt oder vergossen ist. Durch eine derart redundante Ausgestaltung wird die Zuverlässigkeit im Betrieb erhöht.

Es kann im Einzelfall möglich sein, mehrere RFID-Transponder in derselben durchgehenden Bohrung oder Sackbohrung der Hülse anzuordnen. Vorzugsweise aber sind die RFID-Transponder in jeweils einer eigenen Bohrung oder Sackbohrung der Hülse angeordnet.

Das Element der metallurgischen Anlage ist oftmals hohen thermischen Belastungen ausgesetzt. Um den RFID-Transponder zuverlässig in der Hülse zu halten, ist der Klebstoff, mittels dessen der RFID-Transponder in der Hülse eingeklebt ist, oder die Vergussmasse, mittels dessen der RFID-Transponder in der Hülse vergossen ist, daher vorzugsweise hochtemperaturfest. Ein hochtemperaturfester Klebstoff bzw. eine hochtemperaturfeste Vergussmasse liegen vor, wenn das entsprechende Material dauerhaft bei einer Betriebstemperatur mindestens von 200 °C eingesetzt werden kann. Vorzuziehen sind selbstverständlich höhere Betriebstemperaturen, insbesondere 220 °C oder mehr, beispielsweise 240 °C oder mehr. Ideal ist ein noch höherer Temperaturwert, beispielsweise 260 °C. Auch für derart hohe Temperaturen sind Materialien bekannt. Rein beispielhaft kann der Epoxid-Klebstoff "duralco 128" der POLYTEC PT GmbH, 76337 Waldbronn, Deutschland, genannt werden. Es können selbstverständlich aber auch andere Klebstoffe bzw. Vergussmassen verwendet werden, sofern sie die entsprechenden thermischen und Materialeigenschaften aufweisen.

Vorzugsweise weist das Element zum Auffinden des Einbauortes der Hülse in der Nähe der Hülse eine optische Markierung auf. Dadurch ist beim Auslesen des Transponders ohne weiteres erkennbar, zu welcher Stelle des Elements der metallurgischen Anlage ein Auslesegerät geführt werden muss.

Das Element der metallurgischen Anlage ist im Betrieb oftmals mit mindestens einem anderen Element der metallurgischen Anlage verbunden. In manchen Fällen ist es erforderlich, die Hülse derart anzuordnen, dass sie nur dann zugänglich ist, wenn zuvor die Verbindung des Elements der metallurgischen Anlage mit dem anderen Element der metallurgischen Anlage gelöst wird. Sofern möglich, ist die Ausnehmung jedoch derart angeordnet, dass die Hülse zugänglich ist, während das Element der metallurgischen Anlage mit dem anderen Element der metallurgischen Anlage verbunden ist. Dadurch wird das Auslesen des RFID-Transponders erleichtert. Weiterhin ist das Auslesen dadurch auch im montierten Zustand des Elements der metallurgischen Anlage möglich.

Das Element der metallurgischen Anlage kann beispielsweise als Kokillenwand einer Stranggießkokille ausgebildet sein. In diesem Fall ist die Hülse vorzugsweise auf der Rückseite der Kokillenwand angeordnet, also auf der Seite, die im Betrieb von der Metallschmelze bzw. von dem bereits teilerstarrten Metallstrang abgewandt ist.

Alternativ kann das Element beispielsweise als Lanzenkopf einer Sauerstofflanze eines Konverters ausgebildet sein. Im letztgenannten Fall kann die Hülse insbesondere im Inneren des Lanzenkopfes angeordnet sein. Dadurch ist die Hülse im Betrieb vor den rauen Betriebsverhältnissen im Inneren des Konverters geschützt. Weiterhin wird sie in diesem Fall durch den die Sauerstofflanze durchströmenden Sauerstoff gekühlt.

Oftmals weist der Lanzenkopf mehrere Düsen auf, die um eine Lanzenachse der Sauerstofflanze herum verteilt angeordnet sind. In diesem Fall ist die Hülse vorzugsweise zwischen den Düsen angeordnet, insbesondere auf der Lanzenachse. Durch die mehr oder minder zentrale Anordnung der Hülse wird insbesondere erreicht, dass der RFID-Transponder nach dem Entfernen des Lanzenkopfes von einem Grundkörper der Sauerstofflanze leicht zugänglich ist.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Konverter,
- FIG 2: einen Lanzenkopf im Schnitt,
- FIG 3: den Lanzenkopf von FIG 2 in vergrößerter Darstellung,
- FIG 4: einen Einpressvorgang,
- FIG 5: einen Einschrumpfvorgang,
- FIG 6: einen Kraftschluss,
- FIG 7 bis 9: je eine Hülse im Schnitt,
- FIG 10: eine perspektivische Darstellung des Lanzenkopfes von FIG 2,
- FIG 11: einen weiteren Lanzenkopf im Schnitt,
- FIG 12: den Lanzenkopf von FIG 11 in einer perspektivischen, teilweise geschnittenen Darstellung,
- FIG 13: eine weitere Hülse im Schnitt,
- FIG 14: die Hülse von FIG 13 in einer Draufsicht und
- FIG 15: ein Kokillenwand einer Stranggießkokille.

### Beschreibung der Ausführungsformen

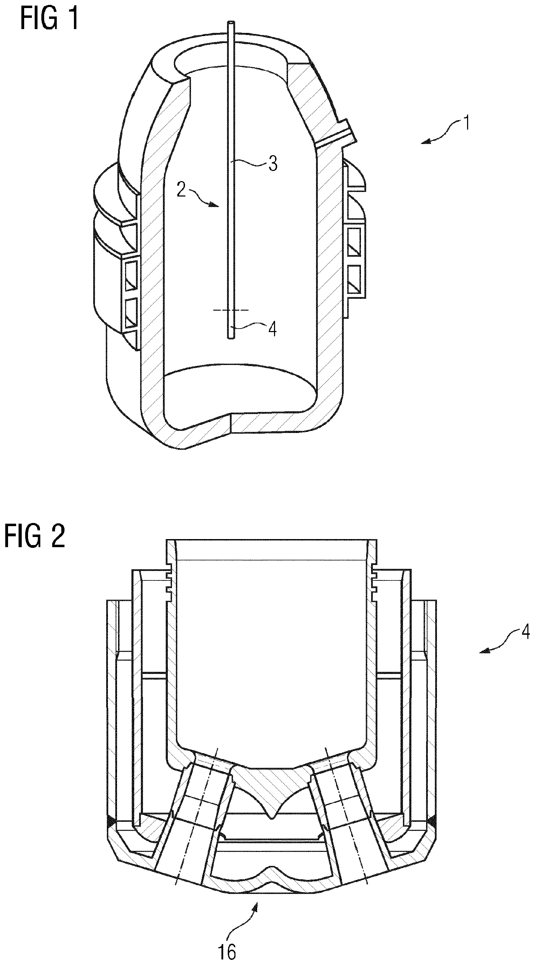

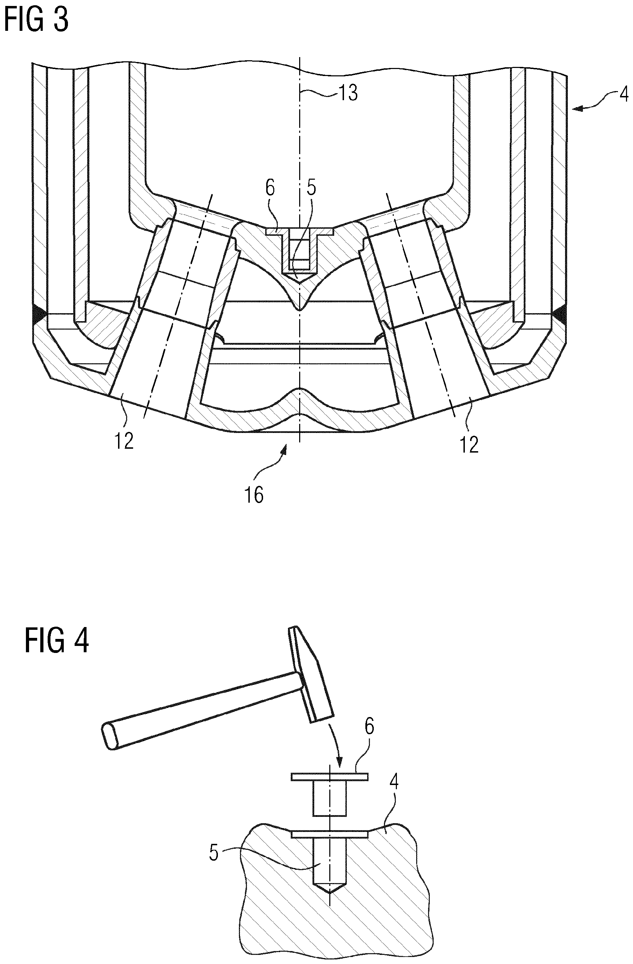

FIG 1 zeigt als Beispiel einer metallurgischen Anlage einen Konverter 1. Eine im Konverter 1 befindliche Metallschmelze ist nicht mit dargestellt. In den Konverter 1 ist eine Sauerstofflanze 2 eingefahren. Die Sauerstofflanze 2 ist in der Regel wassergekühlt. Sie weist einen Lanzengrundkörper 3 auf, an dessen Spitze ein Lanzenkopf 4 angeordnet ist. Der Lanzengrundkörper 3 besteht in der Regel aus Stahl. Der Lanzenkopf 4 besteht oftmals aus Kupfer. In der Regel ist der Lanzenkopf 4 mit dem Lanzengrundkörper 3 geschweißt. Der Lanzenkopf 4 ist ein Beispiel eines Elements einer metallurgischen Anlage, das erfindungsgemäß ausgestaltet sein kann. Der Lanzenkopf 4 ist in FIG 2 nochmals dargestellt und in FIG 3 vergrößert dargestellt.

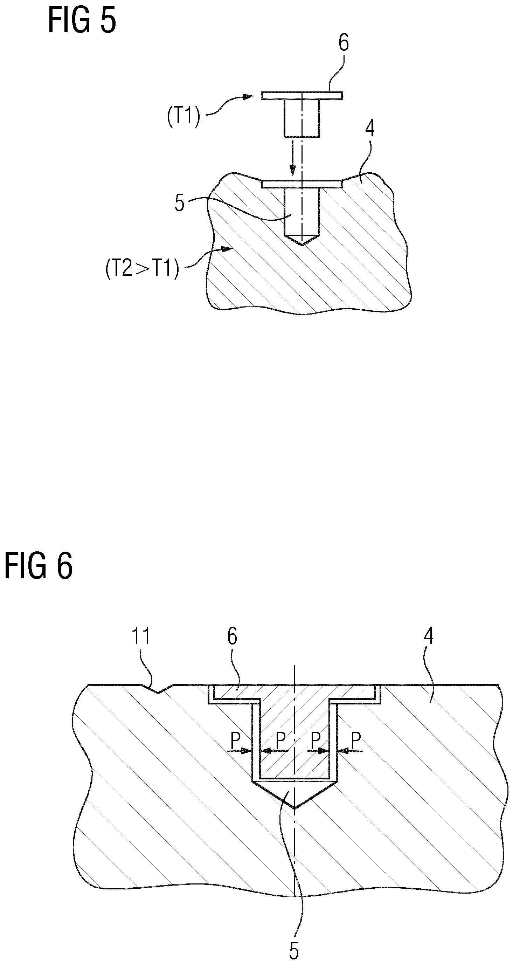

Entsprechend der Darstellung in FIG 3 (in FIG 2 ist dies nicht mit eingezeichnet) weist der Lanzenkopf 4 (bzw. allgemein das Element der metallurgischen Anlage) eine Ausnehmung 5 auf. In der Ausnehmung 5 ist entsprechend der Darstellung in FIG 3 eine Hülse 6 kraftschlüssig gehalten. Beispielsweise kann die Hülse 6 entsprechend der Darstellung in FIG 4 in den Lanzenkopf 4 bzw. allgemein das Element der metallurgischen Anlage eingepresst sein. Dies ist in FIG 4 rein beispielhaft dadurch angedeutet, dass die Hülse 6 ähnlich einem Nagel mittels eines Hammers in die Ausnehmung 5 eingeschlagen wird. Alternativ kann die Hülse 6 in die Ausnehmung 5 eingeschrumpft sein. Dies ist aus der Darstellung in FIG 5 dadurch ersichtlich, dass die Hülse 6 in die Ausnehmung 5 eingeführt wird, während die Hülse 6 eine Temperatur T1 aufweist, die (nennenswert) kleiner als eine Temperatur T2 ist, welche der Lanzenkopf 4 bzw. allgemein das Element der metallurgischen Anlage aufweist. Der Temperaturunterschied kann beispielsweise 30 K, 50 K oder mehr betragen. Unabhängig von der Art der Einbringung der Hülse 6 in die Ausnehmung 5 ist die Hülse 6 jedoch in der Ausnehmung 5 kraftschlüssig gehalten. Es wirken also, siehe FIG 6, entsprechende Presskräfte P auf die Ausnehmung 5 und die Hülse 6.

Genau genommen ist die Darstellung in FIG 6 nicht korrekt, weil entgegen der Darstellung in FIG 6 die Hülse 6 unmittelbar an den Seitenwänden der Ausnehmung 5 anliegt. Die geringfügigen eingezeichneten Abstände dienen jedoch der besseren Darstellung.

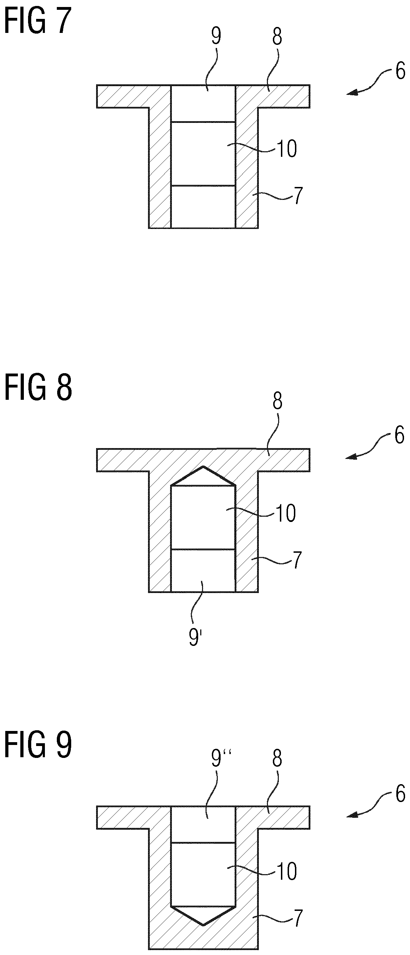

Die FIG 7 bis 9 zeigen mögliche bevorzugte Ausgestaltungen der Hülse 6. Gemäß den FIG 7 bis 9 weist die Hülse 6 einen rohrartigen Abschnitt 7 auf. Der rohrartige Abschnitt 7 ist an einem seiner Enden mit einem Ringflansch 8 abgeschlossen. Alternativ könnte der Ringflansch 8 jedoch auch entfallen, also nur der rohrartige Abschnitt 7 vorhanden sein. In diesem Fall müsste auch die Ausnehmung 5 - siehe die FIG 3 bis 6 - entsprechend modifiziert werden.

Der rohrartige Abschnitt 7 weist in der Regel nur geringe Abmessungen im einstelligen oder niedrigen zweistelligen Millimeterbereich auf. Beispielsweise kann der Außendurchmesser des rohrartigen Abschnitts 7 bei nur 8 mm oder 10 mm liegen und kann die Länge eine in etwa gleiche Größe aufweisen. Der Ringflansch 8 kann einen Durchmesser aufweisen, der in etwa doppelt so groß wie der Außendurchmesser des rohrartigen Abschnitts 7 ist. Seine Dicke liegt in der Regel bei 1,5 mm bis 3,0 mm.

In die Hülse 6 kann entsprechend der Darstellung in FIG 7 eine durchgehende Bohrung 9 eingebracht sein. Alternativ kann in die Hülse 6 entsprechend der Darstellung in den FIG 8 und 9 eine Sackbohrung 9', 9" eingebracht sein. Der Unterschied zwischen den Ausgestaltungen der FIG 8 und 9 besteht darin, dass bei der Ausgestaltung gemäß FIG 8 die Sackbohrung 9' nach der vom Ringflansch 8 abgewandten Seite hin offen ist, während bei der Ausgestaltung gemäß FIG 9 die Sackbohrung 9" zum Ringflansch 8 hin offen ist. Eine Sackbohrung 9', 9" ist insbesondere deshalb vorzuziehen, weil sie - siehe die FIG 7 bis 9 - eine genauere Positionierung eines RFID-Transponders 10 ermöglicht.

Gemäß der Darstellung in den FIG 7 bis 9 ist in der Hülse 6 also der RFID-Transponder 10 angeordnet. Konkret ist der RFID-Transponder 10 in der Bohrung 9 bzw. der Sackbohrung 9', 9" angeordnet. Der RFID-Transponder 10 kann in der Hülse 6 insbesondere mittels eines Klebstoff eingeklebt oder mittels einer Vergussmasse vergossen sein. Der RFID-Transponder 10 kann beispielsweise im VHF-Band, im UHF-Band oder in einem anderen Frequenzband arbeiten. Er kann - nicht aber muss - auch als NFC-Transponder ausgebildet sein. Falls der RFID-Transponder 10 in die Hülse 6 eingeklebt ist, ist der zugehörige Klebstoff vorzugsweise ein hochtemperaturfester Klebstoff. Falls der RFID-Transponder 10 in die Hülse 6 eingegossen ist, ist die zugehörige Vergussmasse vorzugsweise eine hochtemperaturfeste Vergussmasse. Der Klebstoff bzw. die Vergussmasse sollten also für eine dauerhafte Betriebstemperatur von 200 °C oder mehr ausgelegt sein. Der RFID-Transponder 10 kann sehr klein sein, beispielsweise einen Durchmesser von ca. 5 mm und eine Bauhöhe von ebenfalls ca. 5 mm aufweisen.

Die Ausnehmung 5 ist entsprechend der Darstellung in den FIG 4 bis 6 vorzugsweise derart ausgebildet, dass der rohrartige Abschnitt 7 in der Ausnehmung 5 angeordnet ist und der Ringflansch 8 höhengleich mit dem Lanzenkopf 4 bzw. allgemein dem Element der metallurgischen Anlage in der Umgebung der Hülse 6 verläuft. Es erfolgt also ein höhengleicher Übergang vom Lanzenkopf 4 bzw. allgemein von dem Element der metallurgischen Anlage zum Ringflansch 8. Dies ist ohne weiteres möglich, weil entsprechende Werkzeuge zum Einbringen der Ausnehmung 5 existieren.

Vorzugsweise besteht die Hülse 6 aus einem Material mit einer hohen Wärmeleitfähigkeit. Dies ist insbesondere aus FIG 6 erkennbar, gemäß der die Hülse 6 aus Kupfer besteht. Alternativ könnte die Hülse 6 auch aus einem anderen Material mit einer hohen Wärmeleitfähigkeit bestehen, beispielsweise Aluminium.

Weiterhin besteht die Hülse 6 vorzugsweise aus einem Material, das in etwa - d.h. auf ca. 10 % genau - den gleichen Temperaturausdehnungskoeffizienten aufweist wie der Lanzenkopf 4 bzw. allgemein das Element der metallurgischen Anlage in der Umgebung der Hülse 6. Insbesondere kann die Hülse 6 aus demselben Material bestehen wie der Lanzenkopf 4 bzw. allgemein das Element der metallurgischen Anlage in der Umgebung der Hülse 6. Auch dies ist insbesondere aus FIG 6 erkennbar, weil gemäß der Darstellung in FIG 6 zusätzlich zur Hülse 6 auch der Lanzenkopf 4 bzw. allgemein das Element der metallurgischen Anlage aus Kupfer besteht.

Vorzugsweise weist der Lanzenkopf 4 bzw. allgemein das Element der metallurgischen Anlage entsprechend der Darstellung in FIG 6 in der Nähe der Hülse 6 eine optisch erkennbare Markierung 11 auf. Dadurch ist es möglich, den Einbauort der Hülse 6 ohne weiteres aufzufinden. Die Markierung 11 als solche kann nach Bedarf ausgebildet sein. Beispielsweise kann es sich entsprechend der Darstellung in FIG 6 um eine Einkerbung handeln. Es sind aber auch andere Ausgestaltungen der Markierung 11 möglich, beispielsweise eine kleine Erhebung, eine Farbmarkierung und andere mehr.

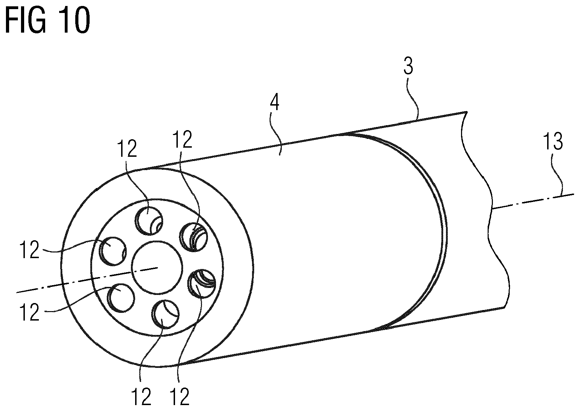

Entsprechend der Darstellung in FIG 3 ist die Hülse 6 im Inneren des Lanzenkopfes 4 angeordnet. Diese Anordnung ist bei einem Lanzenkopf 4 im Regelfall vorzuziehen. In der Regel weist weiterhin der Lanzenkopf 4 entsprechend der Darstellung in den FIG 2 und 3 - siehe ergänzend FIG 10 - mehrere Düsen 12 auf, die um eine Lanzenachse 13 der Sauerstofflanze 2 herum verteilt angeordnet sind. Die Anzahl an Düsen 12 kann variieren. Meist liegt sie zwischen zwei und sieben, beispielsweise entsprechend der Darstellung in FIG 10 bei sechs. Sofern mehrere Düsen 12 um die Lanzenachse 13 herum verteilt angeordnet sind, ist vorzugsweise die Hülse 6 zwischen den Düsen 12 angeordnet. Insbesondere kann die Hülse 6 in diesem Fall auf der Lanzenachse 13 angeordnet sein. Eine derartige Anordnung erleichtert die Zugänglichkeit der Hülse 6 und des RFID-Transponders 10 in jeglicher Hinsicht.

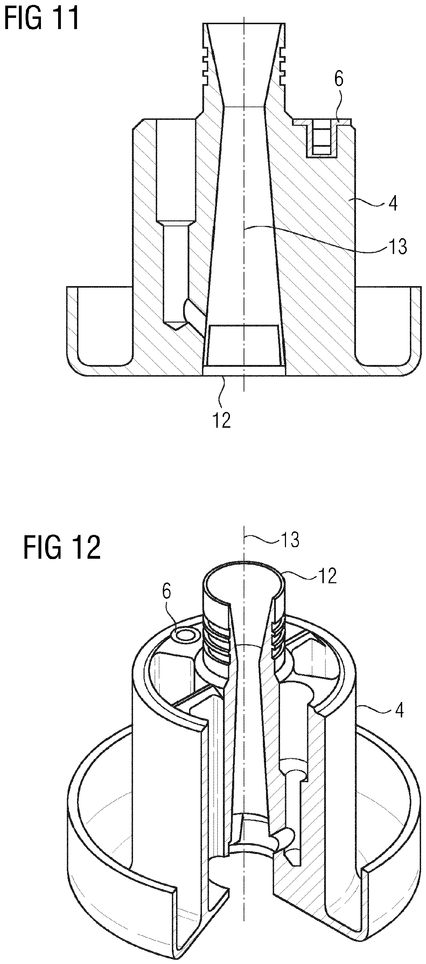

In anderen Fällen kann oder muss die Hülse 6 außermittig angeordnet sein. Insbesondere in denjenigen Fällen, in denen entsprechend der Darstellung in den FIG 11 und 12 der Lanzenkopf 4 nur eine einzige Düse 12 aufweist, ist in der Regel die Düse 12 mittig angeordnet. In diesem Fall muss die Hülse 6 außermittig angeordnet sein.

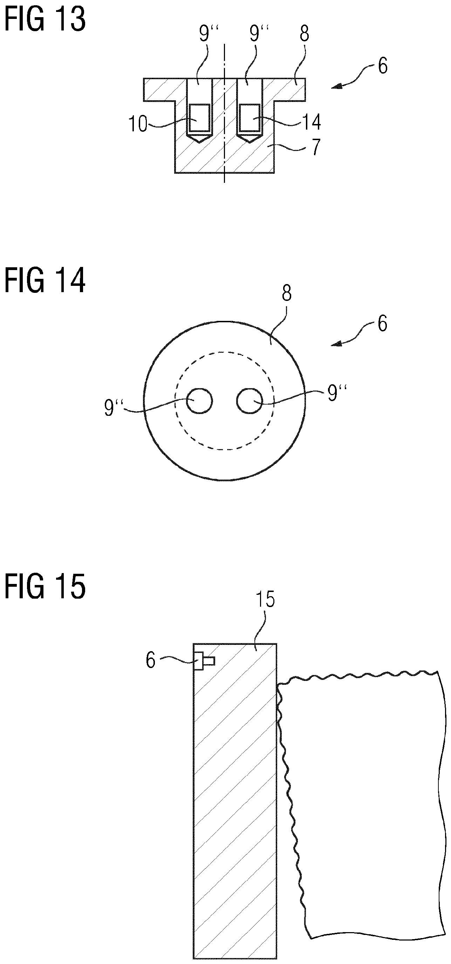

Minimal ist in der Hülse 6 ein einziger RFID-Transponder 10 angeordnet. Es ist jedoch auch möglich, dass in der Hülse 6 mindestens ein weiterer RFID-Transponder 14 angeordnet ist. In diesem Fall ist auch der weitere RFID-Transponder 14 in der Hülse 6 eingeklebt oder vergossen. Weiterhin sind in diesem Fall der RFID-Transponder 10 und der weitere RFID-Transponder 14 in jeweils einer eigenen durchgehenden Bohrung 9 oder Sackbohrung 9', 9" der Hülse 6 angeordnet. Dargestellt ist dies in den FIG 13 und 14 für den Fall einer Hülse 6 mit einem Ringflansch 8 und Sackbohrungen 9", die zum Ringflansch 8 hin offen sind. Gleichgelagerte Sachverhalte sind jedoch auch bei durchgehenden Bohrungen 9 oder bei Sackbohrung in 9", die zum Ringflansch 8 hin geschlossen sind, möglich.

Ein Lanzenkopf 4 ist nicht das einzige mögliche Element einer metallurgischen Anlage, in der erfindungsgemäß eine Hülse 6 mit einem eingeklebten oder eingegossenen RFID-Transponder 10 angeordnet sein kann. Alternativ kann das das Element der metallurgischen Anlage beispielsweise entsprechend der Darstellung FIG 15 als Kokillenwand 15 einer Stranggießkokille ausgebildet sein. In diesem Fall ist die Hülse 6 entsprechend der Darstellung in FIG 15 vorzugsweise im oberen Bereich der Kokillenwand 15 angeordnet, insbesondere oberhalb des Bereichs, in dem sich im Betrieb der Stranggießkokille der Gießspiegel befindet. Weiterhin ist die Hülse 6 vorzugsweise auf der Rückseite der Kokillenwand 15 angeordnet, also auf der Seite, welche von der Metallschmelze abgewandt ist.

Das Element der metallurgischen Anlage - also beispielsweise der Lanzenkopf 4 oder die Kokillenwand 15 - sind im Betrieb in aller Regel mit mindestens einem anderen Element der metallurgischen Anlage verbunden. Beispielsweise ist der Lanzenkopf 4, wie bereits erwähnt, in der Regel mit der Sauerstofflanze 2 geschweißt. Die Kokillenwand 15 ist in der Regel auf einer Gießbühne verbaut und bildet zusammen mit anderen Seitenwänden der Stranggießkokille die Stranggießkokille als ganzes. Je nach Anordnung der Ausnehmung 5 und damit auch der Hülse 6 ist es möglich, dass die Hülse 6 zugänglich ist, während das Element 4, 15 der metallurgischen Anlage mit dem mindestens einen anderen Element der metallurgischen Anlage verbunden ist. Beispielsweise kann die Hülse 6 bei einem Lanzenkopf 4 in einem in den FIG 2 und 3 mit 16 bezeichneten Bereich angeordnet sein. Bei einer Kokillenwand 15 ist eine entsprechende Anordnung in der Regel ohne weiteres möglich. Es ist jedoch ebenso möglich, dass die Ausnehmung und damit auch die Hülse 6 nur dann zugänglich sind, wenn zuvor das Element 4, 15 der metallurgischen Anlage von dem anderen Element der metallurgischen Anlage entfernt wurde, beispielsweise bei einem Lanzenkopf 4 der Lanzenkopf 4 von der Sauerstofflanze 2 entfernt wurde.

Die vorliegende Erfindung weist viele Vorteile auf. So kann beispielsweise die Hülse 6 mit dem RFID-Transponder 10 auf einfache Weise und mit nur sehr geringem Platzbedarf in das Element 4, 15 der metallurgischen Anlage integriert werden. Der RFID-Transponder 10 ist vergleichsweise geschützt und kann lange arbeiten. Er wird in dem Element 4, 15 der metallurgischen Anlage einfach, sicher und zuverlässig gehalten. Ein Entfernen des RFID-Transponders 10 ist beispielsweise durch Bohren möglich. Insbesondere bei einer Anordnung im Innern des Lanzenkopfes 4 ist eine Ausgestaltung realisierbar, bei welcher die Hülse 6 nicht über ihre Umgebung vorsteht. Eine negative Beeinflussung der Strömung des Sauerstoffs im Lanzenkopf 4 kann dadurch vermieden werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Konverter
- 2: Sauerstofflanze
- 3: Lanzengrundkörper
- 4: Lanzenkopf
- 5: Ausnehmung
- 6: Hülse
- 7: rohrartiger Abschnitt
- 8: Ringflansch
- 9: durchgehende Bohrung
- 9', 9": Sackbohrungen
- 10, 14: RFID-Transponder
- 11: Markierung
- 12: Düsen
- 13: Lanzenachse
- 15: Kokillenwand
- 16: Bereich

- P: Presskräfte
- T1, T2: Temperaturen

## Patentansprüche

1. Element einer metallurgischen Anlage, wobei das Element eine Ausnehmung (5) aufweist, in der eine Hülse (6) kraftschlüssig gehalten ist, wobei in der Hülse (6) ein RFID-Transponder (10) mittels eines Klebstoffs eingeklebt oder mittels einer Vergussmasse vergossen ist.

2. Element nach Anspruch 1,
**dadurch gekennzeichnet,**
**dass** die Hülse (6) in das Element eingepresst oder eingeschrumpft ist.

3. Element nach Anspruch 1 oder 2,
**dadurch gekennzeichnet,**
**dass** die Hülse (6) eine durchgehende Bohrung (9) oder eine Sackbohrung (9', 9") aufweist und dass der RFID-Transponder (10) in der Bohrung (9) bzw. der Sackbohrung (9', 9") angeordnet ist.

4. Element nach Anspruch 1, 2 oder 3,
**dadurch gekennzeichnet,**
**dass** die Hülse (6) aus einem Material mit einer hohen Wärmeleitfähigkeit besteht.

5. Element nach einem der obigen Ansprüche,
**dadurch gekennzeichnet,**
**dass** die Hülse (6) aus einem Material besteht, das in etwa den gleichen Temperaturausdehnungskoeffizienten aufweist wie das Element der metallurgischen Anlage in der Umgebung der Hülse (6).

6. Element nach Anspruch 5,
**dadurch gekennzeichnet,**
**dass** die Hülse (6) aus demselben Material besteht wie das Element der metallurgischen Anlage in der Umgebung der Hülse (6) .

7. Element nach einem der obigen Ansprüche,
**dadurch gekennzeichnet,**
**dass** die Hülse (6) einen rohrartigen Abschnitt (7) aufweist, der an einem seiner Enden mit einem Ringflansch (8) abgeschlossen ist, und dass die Hülse (6) derart in der Ausnehmung (5) angeordnet ist, dass der rohrartige Abschnitt (7) in der Ausnehmung (5) angeordnet ist und der Ringflansch (8) höhengleich mit dem Element in der Umgebung der Hülse (6) verläuft.

8. Element nach einem der obigen Ansprüche,
**dadurch gekennzeichnet,**
**dass** in der Hülse (6) mindestens ein weiterer RFID-Transponder (14) eingeklebt oder vergossen ist.

9. Element nach Anspruch 8,
**dadurch gekennzeichnet,**
**dass** der RFID-Transponder (10) und der mindestens eine weitere RFID-Transponder (14) in jeweils einer eigenen durchgehenden Bohrung (9) oder Sackbohrung (9', 9") der Hülse (6) angeordnet sind.

10. Element nach einem der obigen Ansprüche,
**dadurch gekennzeichnet,**
**dass** der Klebstoff, mittels dessen der RFID-Transponder (10) in der Hülse (6) eingeklebt ist, oder die Vergussmasse, mittels dessen der RFID-Transponder (10) in der Hülse (6) vergossen ist, hochtemperaturfest ist.

11. Element nach einem der obigen Ansprüche,
**dadurch gekennzeichnet,**
**dass** das Element zum Auffinden des Einbauortes der Hülse (6) in der Nähe der Hülse (6) eine optisch erkennbare Markierung (11) aufweist.

12. Element nach einem der obigen Ansprüche,
**dadurch gekennzeichnet,**
**dass** das Element der metallurgischen Anlage im Betrieb mit mindestens einem anderen Element (3) der metallurgischen Anlage verbunden ist und dass die Ausnehmung (5) derart angeordnet ist, dass die Hülse (6) zugänglich ist, während das Element der metallurgischen Anlage mit dem anderen Element (3) der metallurgischen Anlage verbunden ist.

13. Element nach einem der Ansprüche 1 bis 12,
**dadurch gekennzeichnet,**
**dass** das Element als Kokillenwand (15) einer Stranggießkokille ausgebildet ist.

14. Element nach einem der Ansprüche 1 bis 12,
**dadurch gekennzeichnet,**
**dass** das Element als Lanzenkopf (4) einer Sauerstofflanze (2) eines Konverters (1) ausgebildet ist.

15. Element nach Anspruch 14,
**dadurch gekennzeichnet,**
**dass** die Hülse (6) im Inneren des Lanzenkopfes (4) angeordnet ist.

16. Element nach Anspruch 15,
**dadurch gekennzeichnet,**
**dass** der Lanzenkopf (4) mehrere um eine Lanzenachse (13) der Sauerstofflanze (2) herum verteilt angeordnete Düsen (12) aufweist und dass die Hülse (6) zwischen den Düsen (12) angeordnet ist, insbesondere auf der Lanzenachse (13) angeordnet ist.
